# EUROPÄISCHE PATENTSCHRIFT

(11) **EP 2 364 248 B1**
(45) Veröffentlichungstag und Bekanntmachung des Hinweises auf die Patenterteilung: **26.06.2013**
(21) Anmeldenummer: 09752846.7
(22) Anmeldetag: 19.11.2009
(51) Int. Cl.: B29C 33/52, B29C 70/30, B29C 73/00

(54) **FORMKÖRPER UND VERFAHREN ZUR HERSTELLUNG EINES FASERVERBUNDBAUTEILS**
MOULDED BODY FOR PRODUCING A FIBRE COMPOSITE COMPONENT
CORPS DE FAÇONNAGE POUR LA FABRICATION D'UN COMPOSANT COMPOSITE RENFORCÉ PAR FIBRES

(30) Priorität: 26.11.2008 DE 102008044069; 26.11.2008 US 118266 P
(43) Veröffentlichungstag der Anmeldung: 14.09.2011
(73) Patentinhaber: Airbus Operations GmbH, 21129 Hamburg (DE)
(72) Erfinder: DITTMANN, Ralf-Peter, 27356 Rotenburg (DE); KASCHEL, Sebastian, 28199 Bremen (DE); ENGLER, Lothar, 27308 Kirchlinteln (DE)
(74) Vertreter: Isarpatent
(86) Internationale Anmeldenummer: PCT/EP2009/065442
(87) Internationale Veröffentlichungsnummer: WO 2010/060850

(56) Entgegenhaltungen:
- US-A1- 2007 196 635

## Beschreibung

Die Erfindung betrifft einen Formkörper zur Herstellung eines Faserverbundbauteils. Ferner betrifft die Erfindung ein Verfahren zur Herstellung eines mit einem duroplastischen Kunststoffmaterial gebildeten Faserverbundbauteils mit mindestens einem erfindungsgemäßen Formkörper.

Im modernen Flugzeugbau, im Anlagenbau, alternativen Energiesystemen sowie bei Sportartikeln finden zunehmend Faserverbundbauteile zur Herstellung von Strukturkomponenten Verwendung. Beispielsweise werden Schalensegmente zur Bildung von Rumpfsektionen in der bekannten Vierschalenbauweise mit kohlefaserverstärkten Epoxidharzen oder anderen faserverstärkten duroplastischen Kunststoffmaterialien hergestellt. Ferner können Seitenleitwerke, Höhenleitwerke, Tragflügel, Flügelkästen, Samerstangen sowie weitere strukturelle und nicht strukturelle Flugzeugkomponenten mit derartigen Faserverbundmaterialien gebildet werden.
Schalensegmente umfassen unter anderem ein mit einem Faserverbundmaterial gebildetes Hautfeld, auf das weitere Strukturkomponenten zur Versteifung, wie zum Beispiel Stringerprofile oder Spantsegmente, innenseitig befestigt, insbesondere aufgeklebt werden. Bei den exemplarisch erwähnten Stringerprofilen handelt es sich um Hohlprofile, die in Längsrichtung der betreffenden Rumpfsektion verlaufen und die bevorzugt innenseitig um den Umfang der Rumpfsektion verteilt angeordnet sind. Zur Aussteifung einer Flugzeugrumpfzelle eines mittelgroßen Flugzeugtyps sind bis zu 4 km Hohlprofile mit einer Länge von jeweils bis zu 20 m erforderlich. Bei diesen Hohlprofilen handelt es sich bevorzugt um so genannte Ω-Stringer mit einer angenähert trapezförmigen Querschnittsgeometrie.
Zur integralen Ausbildung von Stringer-Hohlprofilen auf einem Hautfeld werden zum Beispiel Formkörper auf einem mit einem Prepreg-Material und/oder oder mit einem Faserverbundmaterial gebildeten Hautfeld an den statisch gewünschten Stellen positioniert, wobei das Hautfeld auf einer Unterlage mit einer entsprechend ausgestalteten Oberflächengeometrie abgelegt ist. Die Formkörper und die daran anschließenden Bereiche des Hautfeldes werden anschließend lagenweise mit einem Prepreg-Material belegt oder es werden vorgefertigte Streifenprofile auf den Formkörper gelegt. Nach dem Verlegen von Dichtbändern und optionalen Funktionsschichten (Drainageschicht, Abreißgewebe, Membranen, Verteilermedium, Trennfolie u.a.) sowie dem Aufbringen einer Vakuumfolie wird der gesamte Aufbau evakuiert und in einen Autoklaven zur Aushärtung der Stringerprofile verbracht.
Als Form- bzw. Stützkörper für die herzustellenden Ω-Stringer finden beispielsweise vorgeformte Folienschläuche, die vor dem Aufbringen des Prepreg-Materials unter Druck gesetzt werden und/oder Hartschaum-Profile Verwendung.
Die Hartschaumprofile weisen insbesondere den Nachteil auf, dass sie nur schwer oder gar nicht aus dem fertigen Faserverbundbauteil entfernbar sind und nach dem Aushärtungsvorgang ein statisch unnötiges Zusatzgewicht darstellen. Ferner erschweren sie aufgrund ihrer Porosität die obligatorische Ultraschall-Materialprüfung, da die Poren das Rückwandecho unkontrolliert beeinflussen. Darüber hinaus können die offenporigen Hartschaumprofile im Hinblick auf eindringendes Kondenswasser Probleme bereiten.
Die vorgeformten Druckschläuche hingegen verfügen ferner nur über eine geringe Formstabilität, so dass es zu Störungen, wie zum Beispiel in der Form von lokalen Delaminationen oder Faserwinkelabweichungen, im Lagenaufbau der Ω-Stringer-Hohlprofile oder im Hautlaminat kommen kann. Weiterhin bestehen wegen Perforationen häufig Probleme mit der geforderten Gasdichtigkeit der Schlauchprofile. Darüber hinaus ist das Herausziehen der Druckschläuche selbst im evakuierten Zustand problematisch, da diese unkontrolliert abschnittsweise innenseitig an den Stringer-Hohlprofile anhaften, so dass die Druckschläuche aufgrund ihrer geringen Reißfestigkeit oftmals abreißen und somit unerwünschte Folienrückstände zurückbleiben.
Darüber hinaus existieren Kernmaterialien, die mittels eines Lösungsmittels, wie zum Beispiel Wasser, weitgehend rückstandsfrei aus hinterschnittenen Faserverbundbauteilen heraus lösbar sind. Diese Kernmaterialien sind zum einen jedoch extrem kostenintensiv und zum anderen aufgrund ihrer Wasserlöslichkeit und der hierdurch begrenzten Neigung zur Aufnahme von Wasser nur begrenzt maßhaltig, so dass eine Fertigung von toleranzarmen Faserverbundbauteilen praktisch nicht möglich ist.
FR-A-2195517 offenbart die Merkmale des Oberbegriffs des Anspruchs 1. US-A-2007/0196635 offenbart die Merkmale des Oberbegriffs des Anspruchs 8.
Aufgabe der Erfindung ist es daher, einen Formkörper zur Herstellung von Faserverbundbauteilen zu schaffen, der die vorstehend aufgezeigten Nachteile von Stützkernen zur Herstellung von Verbundbauteilen weitgehend vermeidet.

Diese Aufgabe wird durch einen Formkörper mit den Merkmalen des Patentanspruchs 1 gelöst.
Dadurch, dass der Formkörper zumindest teilweise mit Pappe und/oder mit Papier gebildet ist, ist eine extrem kostengünstige Herstellung von Formkörpern in einer großen Variationsbreite von räumlichen Gestaltungen sowie nahezu beliebigen Längenabmessungen möglich. Mittels des erfindungsgemäß ausgestalteten Formkörpers lässt sich zudem die Herstellung von Faserverbundbauteilen aller Art, wie beispielsweise Winkeln, Platten oder Hohlprofilen, signifikant vereinfachen. Das eingesetzte Papier und/oder die verwendete Pappe können eine nahezu beliebige Materialstärke aufweisen. Es können auch Pappen verarbeitet werden, die eine sich bevorzugt regelmäßig wiederholende geometrische Hohlstruktur aufweisen, wie zum Beispiel Wellpappen oder Sandwich-Pappen. Der mit Pappe und/oder mit Papier gebildete Formkörper verfügt über eine hohe Formstabilität, so dass die zu fertigenden Faserverbundbauteile mit hoher Maßhaltigkeit hergestellt werden können. Darüber hinaus erlaubt die Benutzung der genannten Materialien eine umweltgerechte Entsorgung. Die Verwendung von Papier und/oder Pappmaterialien zur Herstellung der Stützkerne ermöglicht darüber hinaus den Einsatz der gesamten Bandbreite der aus der Verpackungsindustrie bekannten Herstellungsverfahren, wie beispielsweise Schneiden, Falzen, Perforieren, Falten, Knicken, Kleben, Stauchen und Pressen, um Formkörper bzw. Stützkörper mit einer nahezu beliebig komplexen Oberflächengeometrie zu erzeugen, wobei zudem eine kontinuierliche Endlos-Fertigung von Formkörpern mit nahezu beliebigen Längenabmessungen ausgehend von auf Vorratsrollen bereitgehaltenem Papier- und/oder Kartonmaterial möglich ist. Darüber hinaus können erforderlichenfalls mehrere Formkörper durch formschlüssige Verbindungen klebstofffrei gefügt werden. Bevorzugt finden Pappen und/oder Papiere mit einer ausreichenden Temperaturbeständigkeit Verwendung. Die Pappen und/oder Papiere können als Halbzeuge, das heißt bereits herstellerseitig, zum Beispiel antihaftend ausgerüstet sein.

Eine vorteilhafte Weiterentwicklung sieht vor, dass der Formkörper ein Stützkern, insbesondere zur Herstellung eines Hohlprofils, ist.
Hierdurch ergibt sich zum Beispiel eine erhebliche Kostenreduktion bei der Ausbildung von so genannten Ω-Stringer-Hohlprofilen an Rumpfsektionen, die mit Faserverbundmaterialien gebildet sind und die in großen Stückzahlen bei der Rumpfsektionsfertigung bzw. bei der Flugzeugrumpfzellenfertigung benötigt werden.
Darüber hinaus lässt sich der erfindungsgemäße Formkörper in vielen weiteren Bereichen der Technik, wie zum Beispiel dem Schiffbau, der Windenergie, dem Kesselbau, bei der Herstellung von Freizeitartikeln sowie im allgemeinen Maschinenbau in vorteilhafter Weise einsetzen.

Eine weitere vorteilhafte Ausgestaltung des Formkörpers sieht vor, dass dieser eine Querschnittsgeometrie aufweist, die insbesondere durch eine beliebige Kombination einer dreieckigen, rechteckigen, trapezförmigen, kreisringförmigen, ovalen oder elliptischen Querschnittsgeometrie bildbar ist.
Hierdurch können mittels des erfindungsgemäß ausgestalteten Formkörpers Verstärkungsprofile aus Faserverbundmaterialien in einer großen Variationsbreite gefertigt werden. Zum Beispiel können mit einem Stützkern mit einer kreisförmigen Geometrie auf einfache Art und Weise Rohre oder Samerstangen mit Faserverbundmaterialien hergestellt werden. Stützkerne mit einer in etwa trapezförmigen Querschnittsgeometrie finden hingegen Verwendung bei der Herstellung von den so genannten Ω-Strinper-Hohlprofilen, die in großen Stückzahlen zur Aussteifung von Rumpfzellenstrukturen erforderlich sind. Abgesehen hiervon können Stützkerne mit einer im Wesentlichen rechteckförmigen Querschnittsgeometrie zum Beispiel als Druckplatten in einem Prepreg-Aufbau Anwendung finden, um Laminat-Verwerfungen bei der anschließenden Aushärtung in einem Autoklaven zu unterbinden.

Gemäß einer weiteren vorteilhaften Ausgestaltung des Formkörpers ist dieser mit mindestens zwei Teilstützkernen gebildet.
Durch diese Ausgestaltung können komplexere geometrische Formen durch eine Kombination einfacher Grundformen gebildet werden.

Nach Maßgabe einer weiteren Fortbildung des Formkörpers ist vorgesehen, dass die Teilstützkerne zusammengefügt, insbesondere zumindest bereichsweise adhäsiv und/oder formschlüssig miteinander verbunden sind.
Hierdurch wird ein fester Zusammenhalt und damit eine hohe Formstabilität eines aus mehreren Teilstützkernen gebildeten Stützkerns erzielt.

Der Formkörper weist zumindest bereichsweise eine Antihaftschicht und eine Dichtschicht auf.
Durch diese Funktionsschicht kann die Gasdichtigkeit des Formkörpers erreicht werden. Darüber hinaus wird die Entformbarkeit des Formkörpers aus dem hergestellten Faserverbundbauteil erleichtert. Diese Funktionsschichten sind bereits herstellerseitig in die Pappe und/oder das Papier als Halbzeuge für die Formkörper integriert.

Gemäß einer weiteren Fortentwicklung ist der Formkörper durch Unterdruck und/oder durch ein Lösungsmittel aus dem Faserverbundbauteil entfernbar.
Das Anlegen eines Unterdrucks an den Formkörper kann beispielsweise durch das Einbringen eines Saugstopfens in einen Endbereich des Formkörpers erfolgen, während eine hiervon abgewandte Seite des Formkörpers mit einem Verschlussstopfen druckdicht verschlossen wird. Alternativ kann der Stützkern bereits herstellerseitig mit mindestens einem Anschluss für einen Saug- bzw. Druckschlauch versehen sein. Sowohl der Saugstopfen als auch der Verschlussstopfen verfügen jeweils über eine räumliche Gestalt, die einen festen und vor allem druckdichten Sitz im Formkörper ermöglichen. Um dies zu erreichen, können die Stopfen mit elastischen Dichtmitteln, wie zum Beispiel umlaufenden Dichtkanten, Dichtprofilen, Dichtlippen oder dergleichen versehen sein. Ferner können die Stopfen mit einem elastischen Schaumkunststoffmaterial, wie zum Beispiel einem Polyethylenschaum, das zudem allseitig leicht konisch angeschrägt ist, hergestellt sein.
An den Saugstopfen ist eine Vakuumpumpe mittels einer Schlauchleitung angeschlossen. Durch die Vakuumpumpe kann nach der Aushärtung des herzustellenden Faserverbundbauteils im Formkörper ein Unterdruck erzeugt werden, der durch die Wirkung des Umgebungsluftdrucks zum Kollabieren des Formkörpers bzw. des Stützkerns im fertigen Faserverbundbauteil führt. Nach dem Zusammenfallen des Stützkerns kann dieser auf einfache Art und Weise aus dem Faserverbundbauteil herausgezogen werden.
Alternativ kann der Formkörper auch durch ein geeignetes Lösungsmittel, wie zum Beispiel mit Wasser in flüssigem und/oder gasförmigem Zustand, erweicht und gegebenenfalls auch durch Hineinspülen weiteren Lösungsmittels aus dem Faserverbundbauteil rückstandsfrei entfernt werden.

Eine weitere vorteilhafte Ausgestaltung des Formkörpers sieht vor, dass der Formkörper in ein bereits ausgehärtetes Faserverbundbauteil nachträglich einbringbar ist und durch Überdruck zumindest bereichsweise formschlüssig an das Faserverbundbauteil anlegbar ist, um zum Beispiel Reparaturarbeiten an beschädigten CFK-Bauteilen zu ermöglichen. Ein anfänglich noch zusammengefalteter Stützkern kann zum Beispiel im Bereich einer Fehlstelle eines Bauteils, wie beispielsweise einen Riss, eingebracht bzw. eingeschoben werden. Anschließend wird der Stützkern mittels eines Kompressors unter Druck gesetzt bzw. "aufgeblasen", wodurch sich der Stützkern im Idealfall vollflächig an einer Innenfläche des Faserverbundbauteils anlegt und eine Reparatur durch das äußerliche, schichtweise Auflegen von Prepreg-Material ermöglicht wird. Der Anschluss des Kompressors an den Stützkern erfolgt wiederum über einen Schlauch, der an einen Druckstopfen angeschlossen ist, wobei der Druckstopfen wiederum druckdicht mit dem Stützkern verbindbar bzw. in diesen einsteckbar ist. Alternativ kann auch der Reparatur-Stützkern mit mindestens einem herstellerseitig vorgesehenen Anschluss für einen Druck- und/oder einen Unterdruckschlauch versehen sein.
Desweiteren können die Formkörper als plattenförmige Druckstücke und Formkerne für Sandwichbauteile dienen.

Darüber hinaus wird die erfindungsgemäße Aufgabe durch ein Verfahren nach Maßgabe des Patentanspruchs 8 gelöst.
Dadurch, dass mittels des mindestens einen Formkörpers nach Maßgabe eines der Patentansprüche 1 bis 7 eine Geometrie des Faserverbundbauteils zumindest bereichsweise definiert wird,
lassen sich Faserverbundbauteile in großen Stückzahlen mit einer hohen Maßhaltigkeit bei dennoch vertretbaren Fertigungskosten mit den üblichen Herstellungsverfahren für Faserverbundbauteile produzieren. Hierbei können die Formkörper zur zumindest bereichsweisen Geometriedefinition im Zusammenwirken mit einem optionalen Formwerkzeug zur Herstellung von Faserverbundbauteilen mit duroplastischen Harzsystemen eingesetzt werden.

Eine vorteilhafte Fortentwicklung des Verfahrens sieht vor, dass mindestens ein Formkörper zumindest bereichsweise mit einem aushärtbaren Faserverbundmaterial, insbesondere mit einem Prepreg-Material, versehen wird, das Faserverbundmaterial anschließend ausgehärtet und der mindestens eine Formkörper aus dem fertigen Faserverbundbauteil entfernt wird.
Bei einem Hauptanwendungsfall des Verfahrens in Gestalt der Herstellung eines durch Ω-Stringer versteiften Hautfeldes, die zusammen ein Faserverbundbauteil darstellen, gestaltet sich der Verfahrensablauf beispielsweise wie folgt:
In einem ersten Verfahrensschritt wird zunächst ein Hautfeld, das in dieser Verfahrensalternative gleichfalls mit einem Prepreg-Material gebildet ist, auf einer Arbeitsunterlage ausgebreitet. Im Anschluss daran wird mindestens ein erfindungsgemäß mit Pappe und/oder mit Papier gebildeter Formkörper als Stützkern auf dem Hautfeld positioniert und mit einem aushärtbaren Faserverbundmaterial, insbesondere mit dem für das Hautfeld eingesetzten Prepreg-Material lagenweise beschichtet.

Danach erfolgt in einem zweiten Verfahrensschritt das Aushärten des Faserverbundmaterials, was beispielsweise bei Raumtemperatur, in einem Ofen oder in einem Autoklaven unter Überdruck erfolgen kann. Gegebenenfalls sind für die Autoklavenhärtung weitere Verfahrensschritte, wie beispielsweise der Aufbau eines gasdichten Vakuumaufbaus notwendig. Ferner umfasst der Vakuumaufbau weitere Funktionsschichten, wie zum Beispiel Abreißgewebe, Trennfolien, Verteilermedien. An Stelle von Dichtbändern können auch Dichtmassen oder Dichtkitte, Dichtraupen, Klebebänder oder Runddichtungen Anwendung finden. In der Regel ist eine Abdichtung der Vakuumfolie gegenüber der Arbeitsunterlage erforderlich, um das Prepreg-Material durch das Anlegen von Unterdruck von Porositäten, Materialtrennungen und dergleichen zu befreien und einen im Idealfall vollständig homogenen Laminataufbau zu erzielen.
In einem abschließenden dritten Verfahrensschritt vollzieht sich das Entfernen der Formkörper aus dem ausgehärteten Faserverbundbauteil. Dieses Entfernen kann beispielsweise durch das Anlegen eines Unterdrucks an die Formkörper erfolgen, so dass diese durch die Wirkung des Umgebungsluftdrucks kollabieren bzw. in sich zusammenfallen und auf einfache Art und Weise aus dem Faserverbundbauteil herausgezogen werden können. Durch das Kollabieren der Formkörper bzw. der Stützkerne wird erreicht, dass etwaige den Formkörper entgegenstehende Hinterschneidungen aufgelöst werden. Alternativ ist es möglich, den Formkörper durch ein geeignetes Lösungsmittel, wie zum Beispiel Wasser, zu erweichen und erforderlichenfalls rückstandsfrei durch Zufuhr von weiteren Lösungsmitteln aus dem Verbundbauteil heraus zu spülen.
Die vorstehend erläuterte Verfahrensvariante unter Verwendung des erfindungsgemäßen Formkörpers kann bei der Herstellung von Faserverbundbauteilen angewendet werden, die durch das Zusammenfügen von mindestens zwei mit einem Faserverbundmaterial gebildeten Komponenten, wie zum Beispiel einem Hautfeld und einer Vielzahl von Ω-Stringer-Hohlprofilen, gebildet werden. Hierbei wird unter dem Begriff "Faserverbundmaterial" ein zum Verarbeitungszeitpunkt noch nicht ausgehärtetes Faserverbundmaterial, beispielsweise ein kohlefaserverstärktes Epoxidharz, Prepreg und/oder Trockenfaserhalbzeug zur Matrixinfusion, verstanden.

Alternativ kann das Verfahren auch zum Zusammenfügen mindestens eines ausgehärteten Faserverbundbauteils, wie zum Beispiel einer Hautschale, und darauf zu befestigenden, noch nicht ausgehärteten Komponenten, wie beispielsweise Stringerprofilen, Spantsegmenten oder Stützwinkeln, zum Einsatz kommen. Umgekehrt können auch ausgehärtete Stringerprofile auf einem weichen, das heißt mit Prepreg-Material aufgebauten Hautfeld aufgelegt werden.

Weiterhin kann das Verfahren auch für die Fertigung von Bauteilen mittels Imprägnierung bzw. durch eine Harzinfusion von anfänglich trockenen Verstärkungsfaseranordnungen erfolgen. Als Beispiele für Fertigungsverfahren, die von trockenen Verstärkungsfaseranordnungen ausgehen, sind zum Beispiel das "Harzfilm-Infusions"-Verfahren, das "Vakuuminfusions"-Verfahren sowie das so genannte "Resin Transfer Molding = "RTM-Verfahren" zu nennen.

Weitere vorteilhafte Ausgestaltungen des Verfahrens sind in den weiteren Patentansprüchen dargelegt.

In der Zeichnung zeigt:
- **Fig. 1**: Eine perspektivische Ansicht eines beispielhaften Aufbaus zur Herstellung eines Faserverbundbauteils mittels des erfindungsgemäßen Formkörpers,
- **Fig. 2-6**: die Herstellung eines typischen Formkörpers aus einem ebenen Papp - und/oder Papierzuschnitt, und
- **Fig. 7-8**: eine beispielhafte Zusammenstellung von Formkörpern für unterschiedliche Anwendungsfälle mit unterschiedlichen Querschnittsgeometrien.
In der Zeichnung weisen dieselben konstruktiven Elemente jeweils die gleichen Bezugsziffern auf.

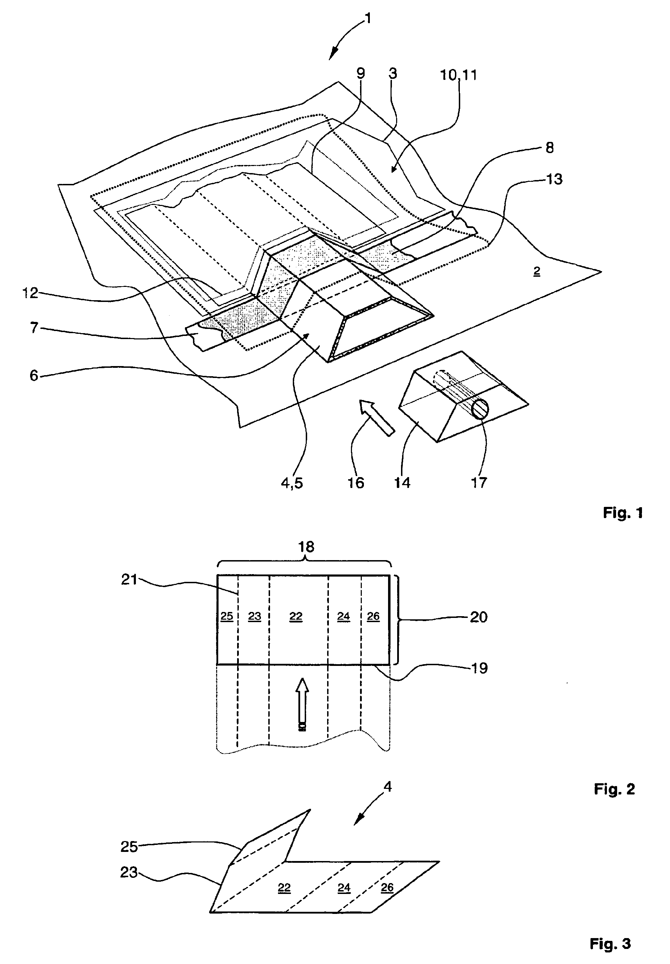

Die **Fig. 1** zeigt in einer prinzipiellen Darstellung einen Aufbau, der zur Herstellung eines Faserverbundbauteils mittels eines erfindungsgemäß ausgestalteten Formkörpers eingesetzt werden kann.
Ein Aufbau 1, der zur Aushärtung in einem Autoklaven bestimmt ist, umfasst unter anderem eine Unterlage 2. Auf dieser ist zur Schaffung eines Hautfeldes ein ebenes, bahnförmiges Prepreg-Material 3 ausgebreitet. Das Prepreg-Material 3 kann eine Vielzahl von übereinander geschichteten Lagen umfassen, um eine Materialstärke von bis zu 70 mm zu erreichen. Die Unterlage 2 verfügt über eine Oberflächengeometrie, deren Gestalt dem zu fertigenden Faserverbundbauteil entspricht und in der Regel in mindestens einer Raumdimension gekrümmt ist. Auf dem Prepreg-Material 3 befindet sich ein, in diesem Fall als ein hohler Stützkern 4 ausgebildeter Formkörper 5. Der Stützkern 4 verfügt über eine trapezförmige Querschnittsgeometrie. Der Stützkern 4 bzw. der Formkörper 5 ist erfindungsgemäß mit einem aus einem anfänglich ebenen durch Falten hergestellten Zuschnitt aus einem Wellpappen-Material gebildet. Zwischen einem Endabschnitt 6 des Stützkerns 4 und dem Prepreg-Material 3 sowie auf dem Stützkern 4 selbst verlaufen zwei bevorzugt selbstklebende Dichtbänder 7,8 zur Schaffung einer gasdichten Randversiegelung. Die Dichtbänder 7,8 sind ein- oder doppelseitig selbstklebend ausgeführt. Der Stützkern 4 ist oberseitig mit einem Prepreg-Material 9 belegt, das im Ausführungsbeispiel nach Maßgabe von Fig. 1 zur Ausbildung eines so genannten Ω-Stringerprofils auf dem im Wesentlichen ebenen Prepreg-Material 3 dient. Die ausgehärteten Prepreg-Materialien 3 und 9 bilden - in Kombination mit weiteren nicht dargestellten Aufbauten aus Prepreg-Material und/oder trockenen Verstärkungsfaseranordnungen - im späteren ausgehärteten Zustand ein Faserverbundbauteil 10, bei dem es sich in der Darstellung um einen Teil eines größeren Schalensegmentes 11 zur Bildung einer Rumpfsektion in Mehrschalenbauweise handelt. Oberhalb und/oder unterhalb der Prepreg-Materialien 3,9 können erforderlichenfalls eine oder mehrere Funktionslagen 12, wie zum Beispiel Antihaftlagen, Trennfolien oder dergleichen, angeordnet sein. Das Prepreg-Material 9 einschließlich der hierauf erforderlichenfalls angeordneten Funktionslagen 12, ist nach oben abschließend mit einer Vakuumfolie 13 bedeckt. Der Aufbau 1, umfassend die Unterlage 2, den Stützkern 4, gegebenenfalls eine oder mehrere Funktionslagen 12 sowie die Vakuumfolie 13, umschließt allseitig das zu fertigende Bauteil in Form des Schalensegments 11. Der ganze Aufbau 1 ist randseitig mittels der Dichtbänder 7,8, bei denen es sich bevorzugt um so genannte "Kittbänder" handelt, gasdicht versiegelt. Darüber hinaus werden in der Regel neben den beiden Dichtbändern 7,8 zusätzliche Abdichtungsmaßnahmen, zum Beispiel elastische Dichtmassen, Dichtschnüre oder Dichtkitte notwendig sein, um einen ausreichenden gasdichten Abschluss der Faserverbundmaterialien 3,9 zu erreichen. Darüber hinaus kann der Aufbau 1 erforderlichenfalls über nicht dargestellte Zuführungen für flüssiges Harz bzw. Anschlüsse zur Evakuierung mittels einer Vakuumpumpe verfügen.

Zur Aushärtung wird der gesamte Aufbau 1 zum Beispiel in einen nicht dargestellten Autoklaven verbracht, wobei der durch die Vakuumfolie 13 und die Unterlage 2 definierte Raum möglichst weitgehend evakuiert wird, um unter anderem Lufteinschlüsse zu verhindern und einen homogenen Laminataufbau ohne Verwerfungen zu erreichen.
Während des Aushärtungsprozesses im Autoklaven herrscht außerhalb der Vakuumfolie 13 und im Innenraum 15 des Stützkerns 4 jeweils der gleiche Druck von beispielsweise bis zu 10 bar, so dass der Stützkern 4 keinen erhöhten Druckkräften ausgesetzt ist, die zu undefinierten Geometrieabweichungen und in der Folge zu unkontrollierbaren sowie insbesondere nicht reproduzierbaren Maßabweichungen im späteren Faserverbundbauteil 10 führen könnten.
Nach dem Abschluss des Aushärtungsprozesses im Autoklaven wird ein Saugstopfen 14 in einen Innenraum 15 des Endabschnittes 6 des Stützkerns 4 in Richtung des Pfeils 16 eingeführt. Der Saugstopfen 14 ist an die jeweilige Geometrie des Stützkerns 4 im Endabschnitt 6 möglichst genau angepasst, so dass ein druckdichter Anschluss an den Stützkern 4 möglich ist. Der Saugstopfen 14 kann zum Beispiel mit einem geschlossenzelligen Schaummaterial hergestellt sein, das leicht konisch ausgestaltet ist. Aufgrund seiner günstigen Antihafteigenschaften in Verbindung mit einer hohen Elastizität eignet sich darüber hinaus auch Silikonkautschuk als Material für die Stopfen.

Über einen bevorzugt steckbaren Anschluss 17 kann der Stützkern 4 durch das Anlegen eines Unterdrucks infolge der Wirkung des Umgebungsluftdrucks kollabiert werden, das heißt er fällt in sich zusammen und kann mit geringem mechanischen Widerstand - insbesondere auch im Fall von großen Längenabmessungen des Stützkerns 4 - rückstandsfrei aus dem Faserverbundbauteil 10 herausgezogen werden. Die Erzeugung des Unterdrucks erfolgt beispielsweise mittels einer nicht dargestellten Vakuumpumpe, die über eine Schlauchleitung mit dem Saugstopfen 14 verbunden ist, wobei der Anschluss der Schlauchleitung an den Saugstopfen durch den (Steck-) Anschluss 17 erfolgt. Um die Evakuierung des Stützkerns 4 zu ermöglichen, ist im Bereich eines nicht dargestellten hinteren zweiten Endabschnittes des Stützkerns 4 ein anschlussfreier Dichtstopfen eingeführt, um den Innenraum 15 gegenüber der umgebenden Atmosphäre hermetisch dicht abzuschließen. Alternativ kann dieser zweite Endabschnitt des Stützkerns 4 auch einfach zusammengedrückt und gegebenenfalls verklebt werden, um einen hermetisch dichten Abschluss zu erreichen. Darüber hinaus müssen gegebenenfalls weitere, im Stützkern 4 noch vorhandene Öffnungen, abgedichtet werden.
Der Saugstopfen 14 kann abweichend von der vorstehend geschilderten Funktion als ein Mittel zur Einbringung von Unterdruck in den Innenraum 15 des Stützkerns 4 auch als ein Druckstopfen fungieren. Diese Ausgestaltung ist insbesondere dann anwendbar, wenn beispielsweise ein defektes Ω-Stringerprofil in einer Rumpfzellenstruktur, beispielsweise ein Ω-Stringerprofil mit einem Riss, nachträglich repariert werden soll. In einer solchen Konstellation wird der Stützkern 4 zunächst im Bereich der Fehlstelle in das Ω-Stringerprofil eingebracht und anschließend mittels des Druckstopfens aufgeblasen, so dass sich der Stützkern 4 im Idealfall vollständig an den Innenraum 15 des Ω-Stringerprofils anlegt (temporär stabiler Laminierkern). Das Aufblasen des Stützkerns 4 kann beispielsweise mit einem Kompressor erfolgen, der mittels einer Schlauchleitung wiederum an den (Steck-) Anschluss 17 des Druckstopfens angeschlossen ist. Anschließend kann die Reparatur der Fehlstelle durch Überlaminieren von Prepreg-Material in bekannter Weise erfolgen. Nach dem Abschluss der Reparatur und der Aushärtung des Prepreg-Materials wird der Druckstopfen wieder in seiner ursprünglichen Funktion als Saugstopfen 14 eingesetzt, so dass der Stützkern 4 durch das Anlegen eines Unterdrucks kollabiert und aus dem Ω-Stringerhohlprofil entfernt werden kann.
Alternativ können statt der Prepreg-Materialien 3,9 auch Trockenfaser-Halbzeuge verwendet werden, wobei zur Harzinfusion ein abweichender Vakuumaufbau erforderlich sein kann.
Darüber hinaus ist das Verfahren unter Einsatz des Formkörpers 5 bzw. des Stützkerns 4 neben der Herstellung von Faserverbundbauteilen für die Produktion von Rumpfsektionen in Mehrschalenbauwise auch für im Wickelverfahren einstückig herzustellende Rumpfsektionen anwendbar.

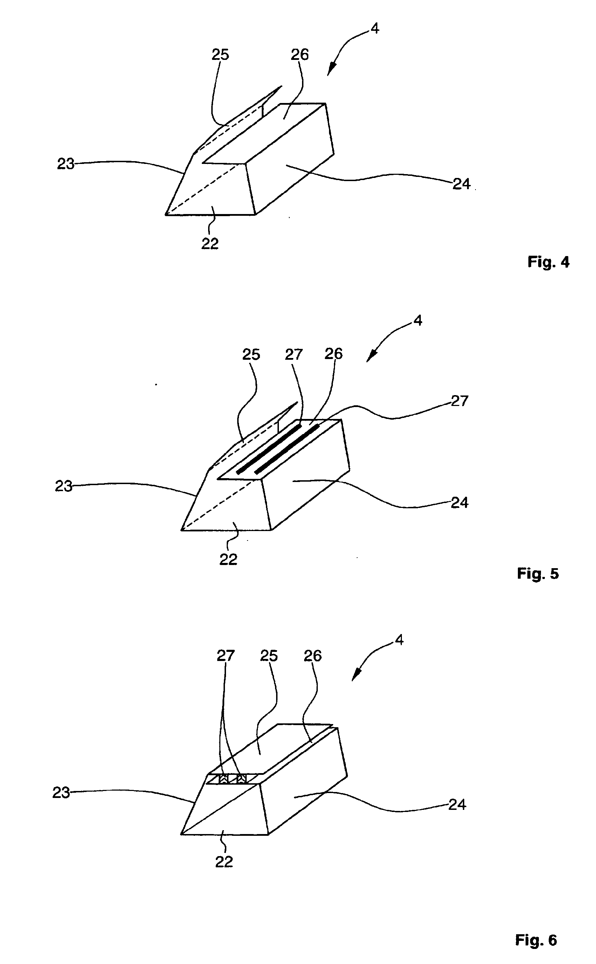

In den Fig. 2 bis 6, auf die im weiteren Fortgang der Beschreibung zugleich Bezug genommen wird, ist schematisch illustriert, wie aus einem ebenen Wellpappen-Zuschnitt bzw. Papierzuschnitt der Stützkern 4 hergestellt wird.
Von einem bahnförmigen Endloszuschnitt 18 ausgehend wird entlang einer Schnittlinie 19 ein Zuschnitt 20 der benötigten Länge abgetrennt. In diesen anfänglich noch ebenen Zuschnitt 20 wird eine Vielzahl von Faltlinien, von denen eine Faltlinie 21 mit einer Bezugsziffer versehen ist, eingebracht, um eine geometrisch definierte Faltung zu ermöglichen. Alternativ kann der verwendete bahnförmige Endloszuschnitt 18 die benötigten Faltlinien 21 bereits enthalten. Entlang dieser, jeweils mit gestrichelten Linien dargestellten Faltlinien erfolgt in weiteren Verfahrensschritten das Auffalten des Stützkerns 4 aus dem Zuschnitt 20. Für den Fall, dass der Endlosabschnitt 18 mit einem Wellpappen-Material gebildet ist, verlaufen die Faltlinien 21 bevorzugt jeweils senkrecht zu den Scheitellinien bzw. den Basislinien, um eine möglichst hohe Steifigkeit des Formkörpers zu erzielen. Für den Fall, dass ein kompaktes Papp- bzw. Papiermaterial Verwendung findet, ist dieser Aspekt irrelevant. Durch die Faltlinien 21 wird der Zuschnitt 20 in eine Grundfläche 22, sowie beidseitig hieran anschließende Seitenflächen 23 und 24 unterteilt. An die beiden Seitenflächen 23,24 schließen sich jeweils die Fügeflächen 25 und 26 an.
Nach Maßgabe von **Fig. 3** wird zunächst die linke Seitenfläche 23 des Stützkerns 4 zusammen mit der daran anschließenden ersten Fügefläche 25 hochgefaltet. Im Anschluss daran erfolgt, wie **Fig. 4** zeigt, das entgegen gerichtete Auffalten der rechten Seitenfläche 24 mit einer daran anschließenden zweiten Fügefläche 26. Anschließend wird auf die zweite Fügefläche 26 zumindest bereichsweise Klebstoff 27 in der Form von durchgehenden Klebstoffraupen aufgetragen und, wie die **Fig. 6** zeigt, durch das Herunterklappen der ersten Fügefläche 25 diese mit der zweiten Fügefläche 26 zur Fertigstellung des Stützkerns 4 verklebt. Anstelle des Verklebens können die Fügeflächen 25,26 beispielsweise auch durch einen Formschluss verbunden werden. Im Fall des Einsatzes von Wellpappe ist die in der Regel erwünschte Gasdichtigkeit des Stützkerns 4 nur durch eine zusätzliche Abdichtungsmaßnahme, wie zum Beispiel mit Dicht- und/oder Klebebändern darstellbar, da ansonsten Gas bzw. die Umgebungsluft durch die Wellenhohlräume und/oder zwischen die Klebstoffraupen hindurch strömen kann.
Diese Herstellung des Stützkerns 4 ist lediglich als ein Beispiel aus einer Vielzahl von denkbaren Fertigungsoptionen zu betrachten, denn zur Herstellung des Stützkerns 4 kann auf die volle Bandbreite der aus der Verpackungsindustrie zur Verfügung stehenden Prozessschritte zurückgegriffen werden.

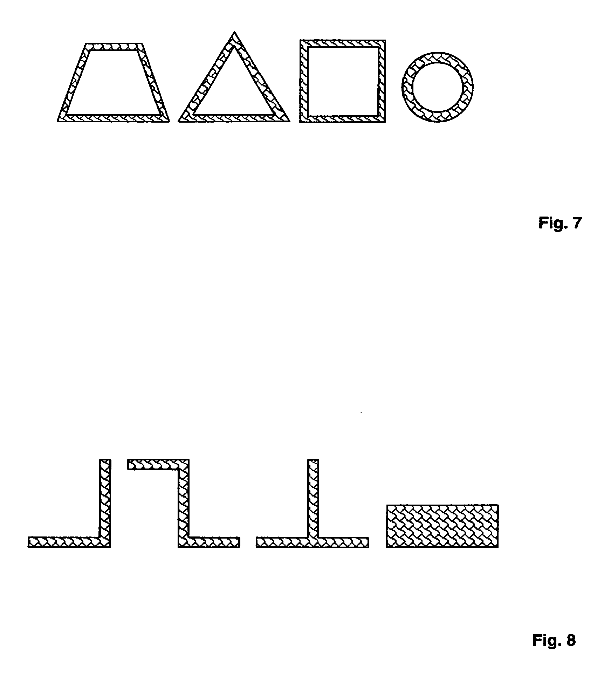

Die **Fig. 7** und **8** illustrieren eine Auswahl von Formkörpern mit jeweils unterschiedlichen Querschnittsgeometrien.
In der **Fig. 7** sind vier (Hohl-)Formkörper mit einer jeweils unterschiedlichen Querschnittsgeometrie zusammengefasst.
Im Unterschied zu den Formkörpern nach Maßgabe der Fig. 7 sind die Formkörper nach **Fig. 8** kompakt, das heißt hohlraumfrei ausgestaltet. Die in der Fig. 7 zusammen gefassten Formkörper dienen vor allem zur Herstellung von Hohlprofilen entsprechender Querschnittsgeometrie mit einem Prepreg-Material und/oder mit trockenen, noch mit einem geeigneten Kunststoffmaterial zu imprägnierenden Verstärkungsfaseranordnungen. Demgegenüber können die Formkörper nach Fig. 8 vor allem als ein universelles Fertigungshilfsmittel (Form- und/oder Unterstützungsmittel) bei der Herstellung von nicht hohlprofilartigen Faserverbundbauteilen, jedoch insgesamt profilartigen, längsgestreckten Elementen, wie zum Beispiel T-Stringer, U-Stringer, I-Stringer, Z-Stringer oder L-Stringer, vorgesehen sein.

Alle in den **Fig. 7** und **8** dargestellten Formkörper können sowohl mit einem konventionellen Wellpappen-Material als auch mit einem kompakten Papier- und/oder Pappmaterial größerer Materialstärke hergestellt sein. Darüber hinaus können die Formkörper auch mit Kartonagen gebildet sein, die über eine sich bevorzugt regelmäßig wiederholende Hohlraumstruktur, in der Art eines Papp-Sandwichelementes, verfügen. Der in **Fig. 8** rechts außen gezeigte Formkörper mit einer rechteckförmigen Querschnittsgeometrie dient bevorzugt als Druckplatte bei der Herstellung von Faserverbundbauteilen aus Prepreg-Material in einem Autoklaven, um insbesondere Verwerfungen im Laminataufbau zu verhindern.

### Bezugszeichenliste

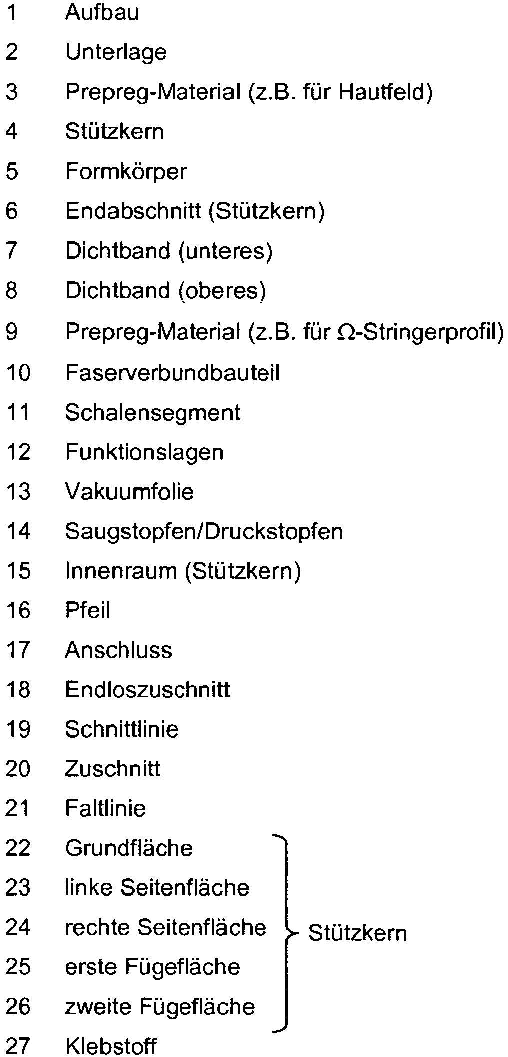

## Patentansprüche

1. Stützkern (4) zur Herstellung eines Faserverbundbauteils (10), wobei der Stützkern(4) zumindest teilweise mit Pappe und/oder mit Papier durch Falzen, Perforieren, Falten, Knicken, Stauchen oder Pressen derselben bzw. desselben gebildet ist, und wobei der Stützkern (4) kollabierbar und aus dem fertigen Faserverbundbauteil (10) entfernbar ist, **dadurch gekennzeichnet, dass** der Stützkern (4) zumindest bereichsweise eine in den Stützkern (4) integrierte Funktionsschicht aufweist, wobei die Funktionsschicht eine Antihaftschicht und eine Dichtschicht ist.

2. Stützkern (4) nach Patentanspruch 1, **dadurch gekennzeichnet, dass** der Stützkern (4) zur Herstellung eines Hohlprofils dient.

3. Stützkern (4) nach Patentanspruch 1 oder 2, **dadurch gekennzeichnet, dass** der Stützkern (4) eine Querschnittsgeometrie aufweist, die durch eine beliebige Kombination einer dreieckigen, rechteckigen, trapezförmigen, kreisringförmigen, ovalen oder elliptischen Querschnittsgeometrie bildbar ist.

4. Stützkern (4) nach einem der vorhergehenden Patentansprüche, **dadurch gekennzeichnet, dass** der Stützkern (4) mit mindestens zwei Teilstützkernen gebildet ist.

5. Stützkern (4) nach Patentanspruch 4, **dadurch gekennzeichnet, dass** die Teilstützkerne zusammen gefügt, insbesondere zumindest bereichsweise adhäsiv und/oder formschlüssig miteinander verbunden, sind.

6. Stützkern (4) nach einem der vorhergehenden Patentansprüche, **dadurch gekennzeichnet, dass** der Stützkern (4) durch Unterdruck und/oder durch ein Lösungsmittel aus dem Faserverbundbauteil (10) entfernbar ist.

7. Stützkern (4) nach einem der vorhergehenden Patentansprüche, **dadurch gekennzeichnet, dass** der Stützkern (4) in ein ausgehärtetes Faserverbundbauteil (10) einbringbar ist und durch Überdruck zumindest bereichsweise formschlüssig an das Faserverbundbauteil (10) anlegbar ist, um insbesondere Feld-Reparaturarbeiten an Faserverbundbauteilen zu ermöglichen.

8. Verfahren zur Herstellung eines mit einem duroplastischen Kunststoffmaterial gebildeten Faserverbundbauteils (10), wobei mindestens ein Stützkern (4) zumindest teilweise mit Pappe und/oder Papier durch Falzen, Perforieren, Falten, Knicken, Stauchen oder Pressen gebildet wird, wobei mittels des mindestens einen Stützkerns (4) eine Geometrie des Faserverbundbauteils (10) zumindest bereichsweise definiert wird, und wobei der mindestens eine Stützkern (4) kollabiert und aus dem fertigen Faserverbundbauteil (10) entfernt wird **dadurch gekennzeichnet, dass** der Stützkern (4) zumindest bereichsweise eine in den Stützkern (4) integrierte Funktionsschicht aufweist, wobei die Funktionsschicht eine Antihaftschicht und eine Dichtschicht ist.

9. Verfahren nach Patentanspruch 8, **dadurch gekennzeichnet, dass** mindestens ein Stützkern (4) zumindest bereichsweise mit einem aushärtbaren Faserverbundmaterial, insbesondere mit einem Prepreg-Material (3, 9), versehen wird, das aushärtbare Faserverbundmaterial ausgehärtet und der mindestens eine Stützkern (4) aus dem fertigen Faserverbundbauteil (10) entfernt wird.

10. Verfahren nach Patentanspruch 8 oder 9, **dadurch gekennzeichnet, dass** mindestens ein Stützkern (4) zumindest bereichsweise mit einer trockenen Verstärkungsfaseranordnung versehen wird, die trockene Verstärkungsfaseranordnung mit einem duroplastischen Kunststoffmaterial zur Schaffung eines aushärtbaren Faserverbundmaterials imprägniert wird, das Faserverbundmaterial ausgehärtet und der mindestens eine Stützkern (4) aus dem fertigen Faserverbundbauteil (10) entfernt wird.

11. Verfahren nach einem der Patentansprüche 8 bis 10, **dadurch gekennzeichnet, dass** der mindestens eine Stützkern (4) mit dem aufgebrachten Faserverbundmaterial zumindest bereichsweise mit einer Vakuumfolie (13) zur Schaffung eines Aufbaus (1) bedeckt wird.

12. Verfahren nach einem der Patentansprüche 8 bis 11, **dadurch gekennzeichnet, dass** beide Endabschnitte (6) des mindestens einen Stützkerns (4) gegenüber der Vakuumfolie (13) und/oder einer Unterlage (2) und/oder dem Faserverbundmaterial und/oder der trockenen Verstärkungsfaseranordnung mit einem geeigneten Dichtmittel, insbesondere mit Dichtbändern (7, 8), abgedichtet werden.

13. Verfahren nach einem der Patentansprüche 8 bis 12, **dadurch gekennzeichnet, dass** der Aufbau (1) zur Aushärtung in einen Autoklaven oder einen Ofen eingebracht wird und/oder die Aushärtung des Aufbaus (1) bei Raumtemperatur und/oder unter Normaldruck erfolgt.

14. Verfahren nach einem der Patentansprüche 8 bis 13, **dadurch gekennzeichnet, dass** der mindestens eine Stützkern (4) nach erfolgter Aushärtung durch das Anlegen von Unterdruck an den mindestens einen Stützkern (4) kollabiert wird.

15. Verfahren nach einem der Patentansprüche 8 bis 14, **dadurch gekennzeichnet, dass** der mindestens eine Stützkern (4) durch ein flüssiges und/oder gasförmiges Lösungsmittel, insbesondere mit Wasser, aus dem Faserverbundbauteil entfernt wird.

## Claims

1. Support core (4) for producing a fibre composite component (10), wherein the support core (4) is formed at least in part with cardboard and/or with paper by scoring, perforation, folding, creasing, compression or compaction thereof, and wherein the support core (4) can be collapsed and removed from the finished fibre composite component (10), **characterised in that** the support core (4) has at least in regions a functional layer which is integrated into the support core (4), wherein the functional layer is a non-stick layer and a sealing layer.

2. Support core (4) as claimed in claim 1, **characterised in that** the support core (4) is used for producing a hollow profile.

3. Support core (4) as claimed in claim 1 or 2, **characterised in that** the support core (4) has a cross-section geometry which can be formed by any desired combination of a triangular, rectangular, trapezoidal, annular, oval or elliptical cross-section geometry.

4. Support core (4) as claimed in any one of the preceding claims, **characterised in that** the support core (4) is formed with at least two partial support cores.

5. Support core (4) as claimed in claim 4, **characterised in that** the partial support cores are joined together, in particular are connected to one another in an adhesive and/or positive-locking manner at least in regions.

6. Support core (4) as claimed in any one of the preceding claims, **characterised in that** the support core (4) can be removed from the fibre composite component (10) by means of negative pressure and/or by means of a solvent.

7. Support core (4) as claimed in any one of the preceding claims, **characterised in that** the support core (4) can be introduced into a cured fibre composite component (10) and can be applied, at least in regions, in a positive-locking manner to the fibre composite component (10) by means of overpressure, in order to permit in particular field repair work on fibre composite components.

8. Method for producing a fibre composite component (10) which is formed by a thermosetting synthetic material, wherein at least one support core (4) is formed at least in part with cardboard and/or paper, by scoring, perforation, folding, creasing, compression or compaction, wherein a geometry of the fibre composite component (10) is defined at least in regions by means of the at least one support core (4) and wherein the at least one support core (4) is collapsed and removed from the finished fibre composite component (10), **characterised in that** the support core (4) has at least in regions a functional layer which is integrated into the support core (4), wherein the functional layer is a non-stick layer and a sealing layer.

9. Method as claimed in claim 8, **characterised in that** at least one support core (4) is provided at least in regions with a curable fibre composite material, in particular with a prepreg material (3, 9), the curable fibre composite material is cured and the at least one support core (4) is removed from the finished fibre composite component (10).

10. Method as claimed in claim 8 or 9, **characterised in that** at least one support core (4) is provided at least in regions with a dry reinforcing fibre arrangement, the dry reinforcing fibre arrangement is impregnated with a thermosetting synthetic material to produce a curable fibre composite material, the fibre composite material is cured and the at least one support core (4) is removed from the finished fibre composite component (10).

11. Method as claimed in any one of claims 8 to 10, **characterised in that** the at least one support core (4) having the fibre composite material applied thereon is covered at least in regions with a vacuum foil (13) to produce a structure (1).

12. Method as claimed in any one of claims 8 to 11, **characterised in that** the two end portions (6) of the at least one support core (4) are sealed with respect to the vacuum foil (13) and/or a base (2) and/or the fibre composite material and/or the dry reinforcing fibre arrangement by means of a suitable sealing means, in particular sealing tapes (7, 8).

13. Method as claimed in any one of claims 8 to 12, **characterised in that** for curing purposes the structure (1) is introduced into an autoclave or an oven, and/or the structure (1) is cured at room temperature and/or under normal pressure.

14. Method as claimed in any one of claims 8 to 13, **characterised in that** the at least one support core (4) is collapsed, after curing has been effected, by the application of negative pressure to the at least one support core (4).

15. Method as claimed in any one of claims 8 to 14, **characterised in that** the at least one support core (4) is removed from the fibre composite component by means of a liquid and/or gaseous solvent, in particular with water.

## Revendications

1. Noyau support (4) pour la fabrication d'un élément composite renforcé par fibres (10), le noyau support (4) étant formé au moins partiellement de carton et/ou de papier par agrafage, perforation, pliage, écrasement ou compression de ces derniers, et le noyau support (4) pouvant être aplati et pouvant être retiré de l'élément composite renforcé par fibres (10) fini, **caractérisé par le fait que** le noyau support (1) présente au moins par secteurs une couche fonctionnelle intégrée dans le noyau support (4), la couche fonctionnelle étant une couche anti-adhésive et une couche d'étanchéité.

2. Noyau support (4) selon la revendication 1, **caractérisé par le fait que** le noyau support (4) sert à la fabrication d'un profil creux.

3. Noyau support (4) selon la revendication 1 ou 2, **caractérisé par le fait que** le noyau support (4) présente une géométrie de section transversale qui peut être formée par une quelconque combinaison d'une géométrie de section transversale triangle, rectangle, trapézoïdale, en forme d'anneau de cercle, ovale ou elliptique.

4. Noyau support (4) selon l'une des revendications précédentes, **caractérisé par le fait que** le noyau support (4) est formé d'au moins deux noyaux supports partiels.

5. Noyau support (4) selon la revendication 4, **caractérisé par le fait que** les noyaux supports partiels sont assemblés, en particulier reliés au moins par secteurs de manière adhésive et/ou par complémentarité de forme.

6. Noyau support (4) selon l'une des revendications précédentes, **caractérisé par le fait que** le noyau support (4) peut être retiré de l'élément composite renforcé par fibres (10) sous l'effet de la dépression et/ou par un solvant.

7. Noyau support (4) selon l'une des revendications précédentes, **caractérisé par le fait que** le noyau support (4) peut être intégré dans un élément composite renforcé par fibres (10) durci et peut être appliqué par surpression au moins par secteurs par complémentarité de forme sur l'élément composite renforcé par fibres (10), pour permettre en particulier des travaux de réparation de surface sur des éléments composites renforcés par fibres.

8. Procédé de fabrication d'un élément composite renforcé par fibres (10) formé d'une matière plastique thermodurcissable, au moins un noyau support (4) étant formé au moins partiellement de carton et/ou de papier par agrafage, perforation, pliage, écrasement ou compression, une géométrie de l'élément composite renforcé par fibres (10) étant définie au moins par secteurs au moyen de l'au moins un noyau support (4), et l'au moins un noyau support (4) pouvant être aplati et retiré de l'élément composite renforcé par fibres (10) fini, **caractérisé par le fait que** le noyau support (4) présente au moins par secteurs une couche fonctionnelle intégrée dans le noyau support (4), la couche fonctionnelle étant une couche anti-adhésive et une couche d'étanchéité.

9. Procédé selon la revendication 8, **caractérisé par le fait qu'**au moins un noyau support (4) est pourvu au moins par secteurs d'un matériau composite renforcé par fibres durcissable, en particulier d'un matériau préimprégné (3, 9), le matériau composite renforcé par fibres durcissable est durci et l'au moins un noyau support (4) est retiré de l'élément composite renforcé par fibres (10) fini.

10. Procédé selon la revendication 8 ou 9, **caractérisé par le fait qu'**au moins un noyau support (4) est pourvu au moins par secteurs d'une disposition en fibres de renfort sèche, la disposition en fibres de renfort sèche est imprégnée d'une matière plastique thermodurcissable pour créer un matériau composite renforcé par fibres durcissable, le matériau composite renforcé par fibres est durci et l'au moins un noyau support (4) est retiré de l'élément composite renforcé par fibres (10) fini.

11. Procédé selon l'une des revendications 8 à 10, **caractérisé par le fait que** l'au moins un noyau support (4) est recouvert du matériau composite renforcé par fibres appliqué au moins par secteurs avec un film sous vide (13) pour créer une structure (1).

12. Procédé selon l'une des revendications 8 à 11, **caractérisé par le fait que** les deux sections terminales (6) de l'au moins un noyau support (4) sont étanchéifiées par rapport au film sous vide (13) et/ou à une base (2) et/ou au matériau composite renforcé et/ou à la disposition en fibres de renfort sèche avec un moyen d'étanchéité adapté, en particulier avec des bandes d'étanchéité (7, 8).

13. Procédé selon l'une des revendications 8 à 12, **caractérisé par le fait que** la structure (1) est intégrée pour le durcissement dans un autoclave ou dans un four et/ou le durcissement de la structure (1) est effectué à température ambiante et/ou sous pression normale.

14. Procédé selon l'une des revendications 8 à 13, **caractérisé par le fait que** l'au moins un noyau support (4) est aplati après le durcissement réalisé par l'application d'une dépression sur l'au moins un noyau support (4).

15. Procédé selon l'une des revendications 8 à 14, **caractérisé par le fait que** l'au moins un noyau support (4) est retiré de l'élément composite renforcé par fibres par un solvant liquide et/ou sous forme de gaz en particulier avec de l'eau.
